# DEMANDE DE BREVET EUROPEEN

(11) **EP 2 574 563 A1**
(43) Date de publication de la demande: **03.04.2013**
(21) Numéro de dépôt: 12006841.6
(22) Date de dépôt: 01.10.2012
(51) Int. Cl.: B65D 1/40, B29C 45/37

(54) **Contenant décoré obtenu par moulage et son moule de fabrication**

(30) Priorité: 29.09.2011 FR 1158740
(71) Demandeur: Cep Tubes, 63550 Saint Remy Sur Durolle (FR)
(72) Inventeur: Dambricourt, M. Géry, 63300 Escoutoux (FR)
(74) Mandataire: Novagraaf Technologies

(57) **Abrégé**

L'invention concerne un contenant (1) moulé constitué d'un seul polymère ou d'un seul mélange de polymères thermoplastiques, présentant un fond (10) et une paroi (11) évasée se raccordant au fond, cette paroi formant un angle au moins égal à 5 degrés avec une normale (N) au plan principal (P) du fond. La paroi présente, sur une partie au moins de sa face externe, un décor (111) contigu à une plage exempte de décor, ce décor couvrant au moins une surface au moins égale 100 millimètres carrés. Le décor comprend un renflement (112) présentant une épaisseur variable entre une épaisseur sensiblement nulle au niveau de ses bords et une épaisseur maximale entre ses bords.

L'invention concerne également un moule monobloc pour fabriquer un tel contenant.

## Description

L'invention concerne, de façon générale, les techniques de moulage.

Plus précisément, l'invention concerne, selon un premier de ses aspects, un contenant constitué d'un seul polymère thermoplastique ou d'un seul mélange de polymères thermoplastiques moulé par injection, présentant un fond s'étendant dans un plan principal et une paroi dressée de forme évasée se raccordant au fond et s'étendant sur une hauteur déterminée jusqu'à un bord continu distant du fond, cette paroi formant, sur au moins 75% de sa hauteur, un angle au moins égal à 5 degrés avec une normale au plan principal du fond, la paroi présentant, sur une partie au moins de sa face externe, un décor contigu à une plage exempte de décor, ce décor couvrant au moins une surface au moins égale 100 millimètres carrés et présentant des bordures formées avec la plage contigüe exempte de décor.

Les contenants de ce type sont bien connus de l'homme du métier et comprennent notamment les contenants à destination horticole couramment utilisés en raison de leur fabrication aisée et de leur coût de revient corrélativement faible.

Notamment en dépit du décor qu'ils comprennent, les contenants connus de ce type présentent des qualités esthétiques et ornementales inférieures à celles des poteries fabriquées à la main.

Bien que ces dernières soient en effet très difficiles à imiter dans le cadre d'une fabrication en grande série, l'invention a pour but de proposer une technique permettant au moins d'enrichir considérablement les qualités décoratives des contenants moulés en polymère, et plus particulièrement de s'assurer de la visibilité de ces qualités décoratives à une distance d'observation de quelques mètres non seulement sur la surface visible de la face externe de la paroi du contenant, mais également sur une large gamme d'angles d'observation.

Par « surface visible de la face externe » de la paroi, on entend ici l'intégralité de la surface de cette paroi externe, offerte à l'oeil d'un observateur qui l'examine sur tout son pourtour en restant dans un plan transversal à la normale au fond de ce contenant et situé à mi-hauteur de cette paroi.

Par « angle d'observation », on entend ici l'angle que forme, avec le plan transversal à la normale au fond du contenant et situé à mi hauteur de la paroi du contenant, une droite passant par un point d'observation distant du contenant et un point observé de la paroi externe du contenant. Par analogie avec le système de coordonnée géographique terrestre, ledit plan transversal correspond au plan défini par l'équateur, et l'angle d'observation n'est autre que la latitude. Ainsi, par « une large gamme d'angles d'observation », on entend ici, par la même analogie, un angle d'observation compris entre une latitude de 60 degrés nord et une latitude de 60 degrés sud.

A cette fin, un contenant réalisé selon l'invention et par ailleurs conforme à la définition générique qu'en donne le préambule ci-dessus, est essentiellement tel que le décor comprend, entre ses bordures, un renflement présentant des bords et, entre les bords du renflement, une épaisseur variable entre une épaisseur sensiblement nulle au niveau de ses bords et une épaisseur maximale entre ses bords, les bordures du décor et les bords du renflement étant deux à deux confondus ou distincts, les bordures du décor présentant dans chaque plan de coupe passant par la normale au plan principal du fond et traversant le décor, des traces inférieure et supérieure respectivement plus proche et plus éloignée du fond du contenant, le profil du renflement dans le plan de coupe présente au moine un point localement culminant par rapport à la plage exempte de décor dont un point spécifique définissant avec la trace supérieure une droite sécante à ladite normale et formant avec celle-ci un angle plus ouvert que tout autre angle formé avec ladite normale par une droite passant par la trace supérieure et par tout autre point localement culminant du profil du renflement et il existe au moins un plan de coupe dans lequel l'angle que forme, par rapport à ladite normale, la droite sécante à cette normale et passant par ledit point spécifique du renflement dans le plan de coupe et par ladite trace supérieure a une valeur positive au moins égale à 5 degrés diminuée de la valeur de l'angle formé entre la paroi du contenant et ladite normale.

Le décor possède ainsi des qualités décoratives améliorées, le renflement induisant avantageusement un jeu d'ombre et de lumière par lequel le décor est rendu aisément observable à quelques mètres de distance du contenant et sous une large gamme d'angles d'observations.

Ainsi, l'invention prévoit avantageusement la possibilité que le renflement présente, dans le plan de coupe, une succession de bosses et de creux. Il s'agit alors par exemple d'un profil en « selle de cheval ». Le renflement accroît ainsi considérablement les qualités décoratives du décor par la multiplication de jeux d'ombre et de lumière.

Selon une particularité, dans chaque plan de coupe, ledit point spécifique du profil du renflement se situe au niveau de l'épaisseur maximale du renflement dans le plan de coupe.

Il est à noter que ces caractéristiques ne doivent pas exclure la possibilité que les bordures du décor puissent ne pas le délimiter par rapport à la plage cantigüe exempte de décor, mais le délimiter par rapport à au moins une bordure d'un décor adjacent. De même, un renflement peut partager au moins un bord avec un autre renflement.

Selon une autre particularité l'angle que forme, par rapport à ladite normale, la droite sécante à cette normale et passant par ledit point spécifique du renflement dans le plan de coupe et par ladite trace supérieure a une valeur au plus égale à 15 degrés diminuée de la valeur de l'angle formé entre la paroi du contenant et ladite normale.

De façon surprenante, il a été découvert que le contenant selon ces caractéristiques peut avantageusement être démoulé depuis un moule comprenant une empreinte monobloc, sans que ne soient altérées les qualités décoratives du décor.

Le décor présente ainsi assurément un renflement suffisamment prononcé pour être rendu aisément observable à quelques mètres de distance du contenant, voire à une distance supérieure à 3 ou 4 mètres, et sous une large gamme d'angles d'observations.

Selon une variante, le décor comprend en outre un palier surélevé par rapport à la plage contigüe exempte de décor, le palier présentant des bordures qui sont formées avec la plage contigüe exempte de décor et qui constituent les bordures du décor ; les bords du renflement sont distincts des bordures du décor et se situent entre ces dernières sur le palier ; les bords du renflement présentent, dans chaque plan de coupe passant par la normale au plan principal du fond du contenant et traversant le décor, des traces inférieure et supérieure respectivement plus proche et plus éloignée du fond du contenant ; l'angle que forme, par rapport à ladite normale, la droite sécante à cette normale et passant par ledit point spécifique du renflement dans le plan de coupe et par ladite trace supérieure a une valeur au plus égale à 15 degrés diminuée de la valeur de l'angle formé entre la paroi du contenant et ladite normale.

Que le décor exhibe non seulement des bordures formées avec la plage contigüe exempte de décor, mais aussi des bords formés entre le palier et le renflement accroît considérablement les qualités décoratives du décor par l'enrichissement consécutif du jeu d'ombre et de lumière. En outre, il a été découvert de façon surprenante que, le contenant selon cette variante peut avantageusement être démoulé depuis un moule comprenant une empreinte monobloc, sans que ne soient altérées les qualités décoratives du décor.

Selon une particularité de cette variante, le palier présente une épaisseur sensiblement constante au moins égale à 0,1 millimètres.

Selon une autre particularité de cette variante, il existe au moins un plan de coupe dans lequel l'angle que forme, par rapport à la normale au plan principal du fond du contenant, la droite sécante à cette normale et passant par ledit point spécifique du renflement dans ledit plan de coupe et par ladite trace supérieure du renflement dans ledit plan de coupe a une valeur au moins égale à 5 degrés diminuée de la valeur de l'angle formé entre la paroi du contenant et ladite normale.

Selon une autre particularité des différents modes ou variante de réalisation, le décor présente une surface en relief granité et le grainage de la surface du décor présente une modulation d'épaisseur au moins égale à 0,05 millimètres.

Par "relief granitée", on entend ici un relief ayant l'aspect d'un ensemble de grains, cette expression n'impliquant cependant pas que ces grains soient réguliers, ni qu'ils soient faciles à distinguer les uns des autres à l'oeil nu.

Par "modulation d'épaisseur", on entend ici la plus grande différence de hauteur observable entre deux points du grainage du décor supposé être développé à plat, le premier point étant choisi au sommet d'un des grains les plus saillants de ce décor, et le second point étant choisi dans l'un des creux les plus profonds de ce décor.

Le décor possède ainsi des qualités décoratives encore accentuées par son aspect granité, surtout si la plage exempte de décor et contigüe au décor présente quant à elle un état de surface poli glace.

L'invention concerne également un moule pour la fabrication d'un contenant constitué d'un seul polymère thermoplastique ou d'un seul mélange de polymères présentant un fond s'étendant dans un plan principal et une paroi dressée de forme évasée se raccordant au fond et s'étendant sur une hauteur déterminée jusqu'à un bord continu distant du fond, cette paroi formant, sur au moins 75 pourcent de sa hauteur, un angle au moins égal à 5 degrés avec une normale au plan principal du fond, ce moule comprenant un noyau définissant la forme de la face interne de la paroi du contenant et une empreinte monobloc comportant une paroi définissant la forme de la face externe de la paroi du contenant et comportant un fond s'étendant dans un plan principal et moulant le fond du contenant, l'empreinte présentant au moins localement une cavité en contre-dépouille, la cavité présentant un fond couvrant au moins une surface au moins égale à 100 millimètres carrés et présentant des bordures formées avec la plage de l'empreinte contigüe à la cavité (définissant une plage exempte de décor de la face externe de la paroi du contenant), et ce moule étant tel que le fond de la cavité comprend au moins une partie présentant des bords et, entre ses bords, une profondeur variable entre une profondeur sensiblement nulle au niveau desdits bords et une profondeur maximale entre lesdits bords, les bordures de la cavité et les bords de la partie du fond de profondeur variable étant deux à deux confondus ou distincts et les bordures de la cavité présentant, dans chaque plan de coupe passant par la normale au plan principal du fond de l'empreinte et traversant la cavité, des traces inférieure et supérieure respectivement plus proche et plus éloignée du fond de l'empreinte, et ce moule étant tel que le profil de la cavité dans le plan de coupe présente au moins un point localement le plus profond par rapport à la plage exempte de décor dont un point spécifique définissant avec ladite trace supérieure une droite sécante à ladite normale et formant avec celle-ci un angle plus ouvert que tout autre angle formé avec ladite normale par une droite passant par la trace supérieure et par tout autre point localement le plus profond du profil de la cavité, et il existe au moins un plan de coupe dans lequel l'angle que forme, par rapport à ladite normale, la droite sécante à cette normale et passant par le point spécifique du profil de la cavité et par ladite trace supérieure a une valeur positive au moins égale à 5 degrés diminuée de la valeur de l'angle formé entre ladite normale et la plage de l'empreinte contigüe à la cavité.

Selon une particularité, dans chaque plan de coupe, ledit point spécifique du profil de la cavité se situe au niveau de la profondeur maximale de la cavité dans le plan de coupe.

Selon une autre particularité, l'angle que forme, par rapport à ladite normale, la droite sécante à cette normale et passant par ledit point spécifique du profil de la cavité et par ladite trace supérieure a une valeur au plus égale à 15 degrés diminuée de la valeur de l'angle formé entre la paroi de l'empreinte et la normale au plan principal du fond de l'empreinte.

Selon une variante, la cavité comprend en outre des surfaces sensiblement planes qui se situent respectivement de part et d'autre de la partie du fond de la cavité et à une profondeur déterminée par rapport à la plage de l'empreinte contigüe à la cavité ; ces surfaces présentent chacune une bordure qui est formée avec la plage de l'empreinte contigüe à la cavité et qui constitue l'une des bordures de la cavité ; les bords de la partie du fond de la cavité sont distincts des bordures de la cavité et se situent entre ces dernières au niveau de profondeur des surfaces ; les bords de la partie de fond présentent, dans chaque plan de coupe, des traces inférieure et supérieure respectivement plus proche et plus éloignée du fond de l'empreinte ; l'angle que forme, par rapport à la normale, la droite sécante à cette normale et passant par le point spécifique du profil de la cavité et par ladite trace supérieure a une valeur au plus égale à 15 degrés diminuée de la valeur de l'angle formé entre ladite normale et la plage de l'empreinte contigüe à la cavité.

Selon une particularité de cette variante, la profondeur à laquelle se situent lesdites surfaces sensiblement planes par rapport à la plage de l'empreinte contigüe à la cavité est au moins égale à 0,1 millimètres.

Selon une autre particularité de cette variante, il existe au moins un plan de coupe dans lequel l'angle que forme, par rapport à la normale au plan principal du fond de l'empreinte, la droite sécante à cette normale et passant par ledit point spécifique du profil de la cavité et par ladite trace supérieure a une valeur positive au moins égale à 5 degrés diminuée de la valeur de l'angle formé entre ladite normale et la plage de l'empreinte contigüe à la cavité.

Par ailleurs, le fond de la cavité présente une surface granitée et le grainage du fond à surface granitée de la cavité présente une modulation de profondeur au moins égale à 0,05 millimètres.

Par "modulation de profondeur", on entend ici la plus grande différence de profondeur observable entre deux points du fond à surface granitée supposé être développé à plat, le premier point étant choisi au sommet d'un des grains les plus saillants de la surface granitée, et le second point étant choisi dans l'un des creux les plus profonds de cette surface granitée.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue schématique en élévation d'un exemple de contenant réalisé suivant l'invention;
- la figure 2 est une vue schématique en coupe d'un exemple de moule conforme à l'invention;
- la figure 3 illustre à échelle agrandie un profil du grainage de la cavité de l'empreinte supposé être développée à plat,
- la figure 4 représente le profil en coupe de la cavité de l'empreinte (à gauche) repérée par la référence III de la figure 2, ainsi que le profil du décor correspondant (à droite);
- la figure 5 représente le profil en coupe de la cavité de l'empreinte (à gauche) comprenant des surfaces sensiblement planes situées respectivement de part et d'autre de la partie du fond de profondeur variable, ainsi que le profil du décor correspondant (à droite) ; et
- la figure 6 représente le profil en coupe de la cavité de l'empreinte, repérée par la référence III de la figure 2, comprenant des surfaces sensiblement planes situées respectivement de part et d'autre de la partie du fond de profondeur variable, dans le cas où le fond de la cavité présente une surface granitée,
- la figure 7 représente le profil en coupe du renflement dans le cas où ce dernier comprend deux bosses et un creux entre ses bosses.

Comme annoncé précédemment, l'invention concerne notamment un contenant 1 constitué d'un seul polymère thermoplastique ou d'un seul mélange de polymères thermoplastiques moulé par injection. Par exemple, le contenant est plus particulièrement réalisé en un polymère teinté dans la masse et contenant du polypropylène en tant que constituant d'un mélange ou en tant que copolymère.

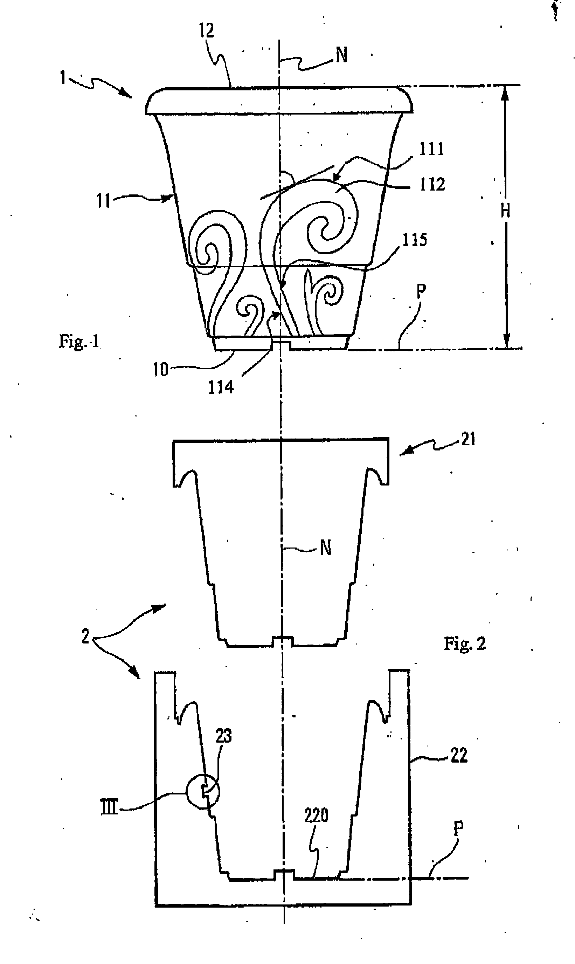

Comme le montre la figure 1, un tel contenant présente essentiellement un fond 10 s'étendant dans un plan principal P, et une paroi dressée 11 de forme évasée se raccordant au fond 10.

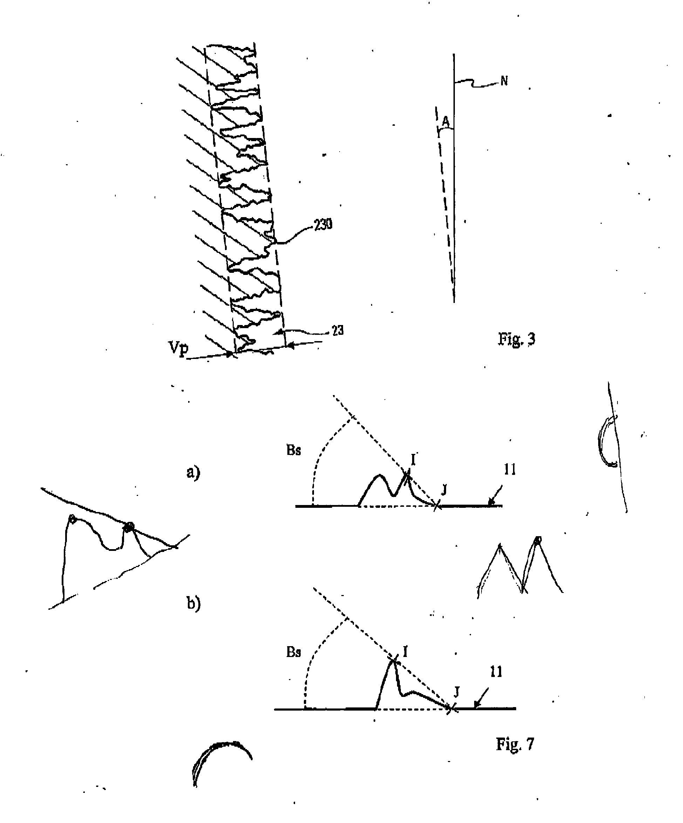

La paroi 11 s'étend, sur une hauteur H typiquement au moins égale à 10 centimètres, jusqu'à un bord continu 12 distant du fond 10, et forme, sur au moins 75% de sa hauteur H, un angle A au moins égal à 5 degrés avec la normale N au plan principal P du fond 10, l'angle A étant visible sur les figures 3, 4, 5 et 6.

Alors que l'invention est difficilement mise en oeuvre sur des contenants dont l'angle A est sensiblement inférieur à 5 degrés, elle est en revanche applicable aux contenants dont l'angle A est au moins égal à 5 degrés, et, a fortiori, notamment aux contenants dont l'angle A est de l'ordre de 7 degrés ou plus de 7 degrés.

En outre, l'angle A peut varier en fonction de la hauteur à laquelle il est mesuré sur la paroi du contenant, comme l'illustre la figure 1. Dans l'éventualité d'une telle variation de l'angle A, toutes les caractéristiques du présent contenant qui sont décrites ci-dessous comme dépendantes de la valeur de l'angle A sont donc à considérer comme dépendant de la valeur locale de l'angle A à la hauteur considérée sur la paroi du contenant.

Selon l'invention, la paroi 11 de ce contenant présente, sur une partie au moins de sa face externe, un décor 111 contigu à une plage exempte de décor.

En outre, le décor couvre au moins une surface au moins égale à 100 millimètres carrés et présente des bordures 114, 115 formées avec la plage contigüe exempte de décor.

Pour un rendu optimal, il est judicieux de prévoir que le décor occupe au moins 8% de la surface visible de la face externe de la paroi de ce contenant.

Selon l'invention, le décor 111 comprend, entre ses bordures 114, 115, un renflement 112. Ce renflement présente lui-même des bords 116, 117, et, entre ses bords 116, 117, une épaisseur variable entre une épaisseur sensiblement nulle au niveau de ses bords 116, 117 et une épaisseur maximale Emax entre ses bords 116, 117.

Les bordures 114, 115 du décor 111 et les bords 116, 117 du renflement 112 sont deux à deux confondus ou distincts.

Ces caractéristiques ont pour effet de conférer au contenant un aspect visuel très flatteur en raison du contraste entre le décor et la plage contiguë exempte de décor. Plus particulièrement, le renflement 112 induit avantageusement un jeu d'ombre et de lumière par lequel le décor 111 est rendu aisément observable à quelques mètres de distance du contenant 1 et sous une large gamme d'angles d'observations, Le décor 111 possède ainsi des qualités décoratives améliorées.

Il convient ici de préciser que, le décor peut être constitué par des éléments de décor séparés les uns des autres, et/ou un élément de décor peut inclure une plage exempte de décor.

En outre, l'expression "plage exempte de décor" s'entend ici comme toute plage de la face externe de la paroi 11 qui ne comprend pas de décor tel que spécifiquement défini précédemment, ce qui n'implique pas que la plage exempte de décor, ou l'ensemble des plages exemptes de décor, doivent nécessairement présenter un aspect homogène.

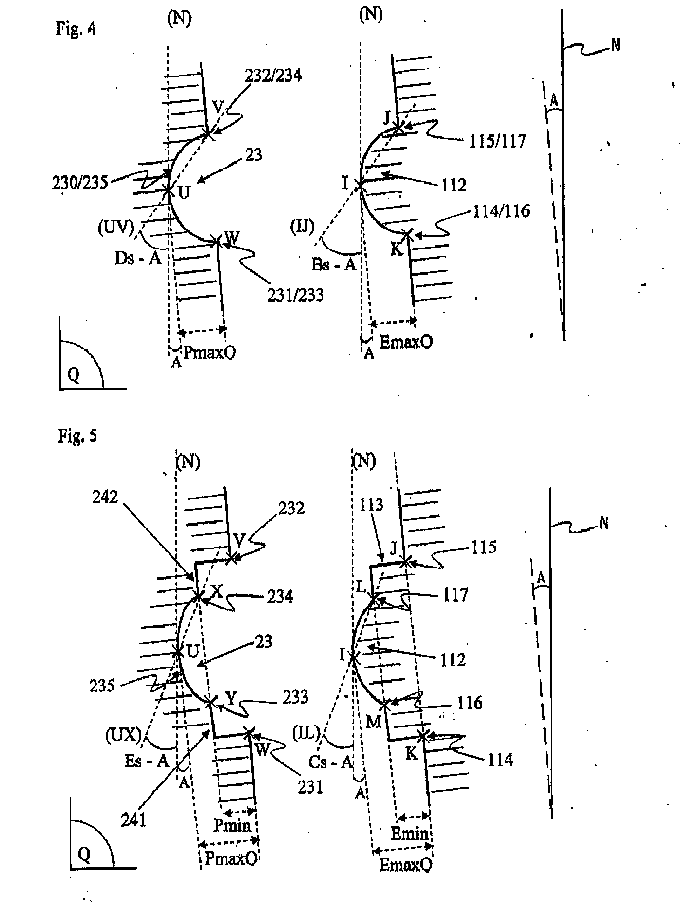

Selon l'invention, et comme illustré sur les figures 4 et 5, les bordures 114, 115 du décor 111 présentant, dans chaque plan de coupe Q passant par la normale N et traversant le décor 111, des traces inférieure et supérieure K, J respectivement plus proche et plus éloignée du fond 10 du contenant 1, le profil du renflement 112 dans le plan de coupe Q présente au moins un point localement culminant par rapport à la plage exempte de décor dont un point spécifique I définissant avec la trace supérieure J une droite IJ sécante à la normale N et formant avec celle-ci un angle Bs-A plus ouvert que tout autre angle formé avec la normale N par une droite passant par la trace supérieure J et par tout autre point localement culminant du profil du renflement 112.

Par ailleurs, il existe au moins un plan de coupe Q dans lequel l'angle Bs-A que forme, par rapport à la normale N, la droite IJ sécante à cette normale N et passant par ledit point spécifique I et par la trace supérieure J a une valeur positive au moins égale à 5 degrés diminuée de la valeur de l'angle A.

Le décor 111 présente ainsi assurément l'avantage de comprendre un renflement 112 suffisamment prononcé pour être rendu aisément observable à quelques mètres de distance du contenant 1, voire à une distance supérieure à 3 ou 4 mètres, et sous une large gamme d'angles d'observations.

L'angle Bs-A a préférentiellement une valeur au plus égale à 15 degrés diminuée de la valeur de l'angle A.

De façon surprenante, il a été découvert que le contenant 1 selon cette caractéristique peut avantageusement être démoulé depuis un moule 2 comprenant une empreinte 22 monobloc, sans que ne soient altérées les qualités décoratives du décor 111.

Il est à noter que cette caractéristique définie la valeur maximale de l'angle Bs en fonction de la valeur maximale de l'angle Bs-A et de la valeur de l'angle A. Définir la valeur maximale de l'angle Bs de cette façon est particulièrement judicieux du fait de la variabilité de l'angle A. Il est toutefois possible, à angle A donné, de définir l'angle Bs comme l'angle formé entre la tangente au renflement prise à son point spécifique **I** et la droite IJ passant par ledit point spécifique I et par ladite trace supérieure J.

Dans le but d'améliorer encore la perception du décor, on retiendra qu'il existe au moins un plan de coupe Q dans lequel l'angle Bs-A est préférentiellement égal à 2 degrés, et plus préférentiellement encore, égal à 3 degrés.

Par ailleurs, l'invention prévoit avantageusement la possibilité que le profil du renflement 112 dans le plan de coupe Q présente une succession de bosses et de creux. Il s'agit alors par exemple d'un profil en « selle de cheval », exhibant deux bosses et un creux entre ces deux bosses. Le renflement à multiples bosses accroît ainsi considérablement les qualités décoratives du décor par la multiplication de jeux d'ombre et de lumière.

Selon un cas particulier de l'invention, dans chaque plan de coupe Q passant par la normale N et traversant le décor 111, le point spécifique I du profil du renflement 112 se situe au niveau de l'épaisseur maximale EmaxQ du renflement 112 dans le plan de coupe Q,

Il est à noter ici que l'épaisseur maximale EmaxQ du renflement 112 dans le plan de coupe Q est inférieure ou égale à l'épaisseur maximale Emax du renflement 112, tout dépendant du plan de coupe Q considéré.

Un premier mode de réalisation est illustré sur la figure 7. Dans le cas référencé a), ledit point spécifique I correspondant au point culminant du profil du renflement dans le plan de coupe Q est le plus proche de la trace supérieure J. Dans le cas référencé b), ledit point spécifique I correspondant au point culminant du profil du renflement dans le plan de coupe Q est le plus éloigné de la trace supérieure J.

Selon un deuxième mode de réalisation illustré sur les figures 4 et 5, dans chaque plan de coupe Q passant par la normale N et traversant le décor 111, l'épaisseur du renflement 112 croit de façon strictement monotone depuis chacun de ses bords 116, 117 jusqu'à un point spécifique I du renflement 112 qui culmine la plage exempte de décor et se situe au niveau d'épaisseur maximale EmaxQ du renflement 112 dans le plan de coupe Q.

Il convient ici de préciser que ces modes de réalisation ne doivent pas exclure la possibilité que les bordures 114, 115 du décor 111 puissent ne pas le délimiter par rapport à la plage contigüe exempte de décor, mais le délimiter par rapport à au moins une bordure d'un décor adjacent. De même, un renflement peut partager au moins un bord avec un autre renflement.

Le cas où les bords 116, 117 du renflement 11 sont deux à deux confondus avec les bordures 114, 115 du décor 111 est illustré sur la figure 4.

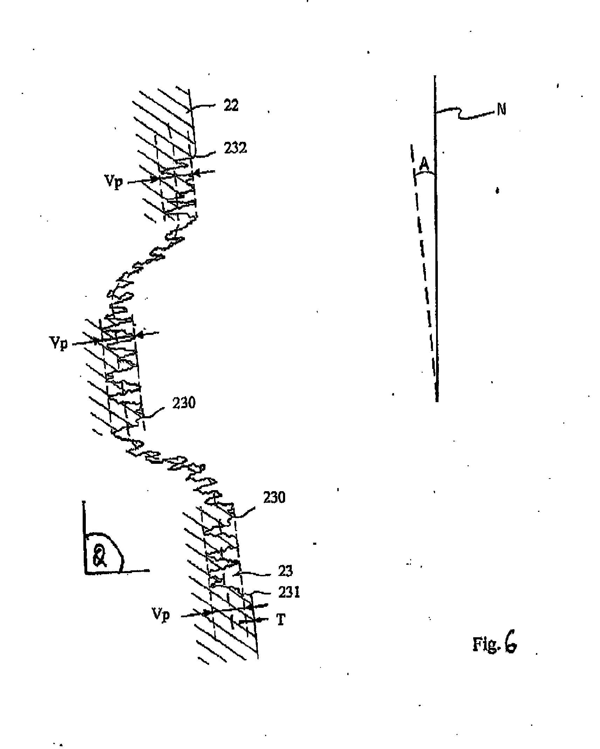

Selon un autre cas, illustré sur les figures 5 et 6, le décor 111 comprend non seulement le renflement 112, mais également un palier 113. Le palier 113 est surélevé par rapport à la plage contigüe exempte de décor. On peut définir au palier 113 des bordures formées avec la plage contigüe exempte de décor. Les bordures du palier constituent alors les bordures 114, 115 du décor 111. Le renflement 112 étant situé sur le palier 113, les bords 116, 117 du renflement 112 sont distincts des bordures 114, 115 du décor 111 et se situent entre ces dernières sur le palier 113.

Le décor 111 exhibe ainsi non seulement des bordures 114, 115 formées avec la plage contigüe exempte de décor, mais aussi des bords 116, 117 formés entre le renflement 112 et le palier 113. De ce fait, le renflement 112 selon cette caractéristique accroît considérablement les qualités décoratives du décor 111 par l'enrichissement consécutif du jeu d'ombre et de lumière.

Le palier 113 présente plus particulièrement une épaisseur Emin sensiblement constante au moins égale à 0,1 millimètres.

Dans la problématique du démoulage du contenant depuis une empreinte monobloc, il paraît bon de préciser une valeur maximale de l'épaisseur du palier 113. Toutefois, cette dernière dépend non seulement des dimensions du contenant 1, mais également de la hauteur du décor 111 par rapport au fond 10 du contenant 1. Plus particulièrement, pour un angle A fixé, d'une part plus le contenant est de dimensions élevées plus l'épaisseur du palier peut être élevée, d'autre part plus le décor 111 est éloigné du fond 10 du contenant 1 plus l'épaisseur du palier peut être élevée, C'est donc à titre purement illustratif qu'il est précisé une épaisseur maximale du palier 113 comprise entre 0,3 millimètres et 2 millimètres.

En outre, pour un décor 111 présentant un renflement 112 et un palier 113 tels que décrits ci-dessus, on peut établir que les bords 116, 117 du renflement 112 présentent, dans chaque plan de coupe Q passant par la normale N et traversant le décor 111, des traces inférieure et supérieure M, L respectivement plus proche et plus éloignée du fond 10 du contenant 1.

L'angle Cs-A que forme, par rapport à la normale N, la droite IL sécante à cette normale N et passant par ledit point spécifique I et par ladite trace supérieure L a une valeur au plus égale à 15 degrés diminuée de la valeur de l'angle A.

Il a été découvert de façon surprenante que, le contenant selon cette variante peut avantageusement être démoulé depuis un moule comprenant une empreinte monobloc, sans que ne soient altérées les qualités décoratives du décor.

En outre, il existe au moins un plan de coupe Q dans lequel l'angle Cs-A a une valeur au moins égale à 5 degrés diminuée de la valeur de l'angle A.

Dans le but d'améliorer encore la perception du décor, on retiendra qu'il existe au moins un plan de coupe Q dans lequel l'angle Cs-A est préférentiellement égal à 2 degrés, et plus préférentiellement encore, égal à 3 degrés.

Comme il a été dit antérieurement, la visibilité du décor est défini par l'ouverture de l'angle Bs et/ou de l'angle Cs ; si l'on veut disposer à la fois d'un angle Cs ouvert et d'un décor de grande largeur, le palier permet de répondre à ces deux caractéristiques tout en préservant une hauteur maximale acceptable telle que définie ci-dessus.

Il est bon de noter ici que les différentes contraintes angulaires ci-dessus définies ne sont pas exclusives les unes des autres, mais au contraire se complètent éventuellement pour définir le renflement 112 du décor 111 que ce dernier comprenne ou non un palier 113.

Selon une autre particularité, le décor 111 présente une surface granitée et le grainage du décor 111 présente une modulation d'épaisseur au moins égale à 0,05 millimètres.

Le décor possède ainsi des qualités décoratives encore accentuées par son aspect granité, surtout si la plage exempte de décor et contigüe au décor présente quant à elle un état de surface poli glace.

La modulation d'épaisseur du grainage est choisie supérieure à la valeur susmentionnée, notamment de façon à obtenir une visibilité accrue du décor et/ou un effet visuel enrichi, allant dans le sens d'une modulation d'épaisseur du grainage élevée. Toutefois, à mesure que la modulation d'épaisseur du grainage croît (au dessus de 0,05 mm), le décor devient de plus en plus salissant, en ce sens qu'il fixe d'autant plus de poussières, et ce, d'autant plus aisément. On comprend ainsi que le choix de la modulation d'épaisseur du grainage peut dépendre de l'usage effectif du contenant, celui-ci pouvant par exemple être disposé en intérieur ou en extérieur.

L'invention concerne également un moule 2 permettant de fabriquer un contenant tel que précédemment défini.

Comme le montre la figure 2, ce moule comprend de façon connue en soi un noyau 21 dont la surface extérieure définit la forme de la face interne du fond 10 et de la paroi 11 du contenant 1, et une empreinte 22 monobloc dont la surface intérieure définit la forme de la face externe du fond 10 et de la paroi 11.

Pour ce faire, l'empreinte 22 comporte donc un fond 220 qui correspond au fond 10 du contenant et qui peut ainsi être considéré comme s'étendant dans le même plan principal P que le fond 10 du contenant 1 lors du moulage de ce contenant et présentant donc la même normale N.

Selon l'invention, l'empreinte 22 présente au moins localement une cavité 23 en contre-dépouille présentant un fond 230.

La cavité 23 couvre au moins une surface au moins égale à 100 millimètres carrés et présente des bordures 231, 232 formées avec la plage de l'empreinte contigüe à la cavité 23 et définissant la plage exempte de décor de la paroi 11 du contenant 1.

Le fond 230 comprend au moins une partie 235 présentant des bords 233, 234 et, entre ses bords 233, 234, une profondeur variable entre une profondeur sensiblement nulle au niveau de ses bords 233, 234 et une profondeur maximale Pmax entre ses bords 233, 234.

Les bordures 231, 232 de la cavité 23 et les bords 233, 234 de la partie 235 du fond 230 de profondeur variable sont deux à deux confondus ou distincts.

Un moule ainsi conçu permet de mouler un contenant 1 décoré tel que précédemment défini, et notamment dont le décor présente un renflement 112 le rendant aisément observable à quelques mètres de distance du contenant 1 et sous une large gamme d'angles d'observations.

Selon l'invention, et comme illustré sur la figure 7, les bordures 231, 232 de la cavité 23 présentant, dans chaque plan de coupe Q passant par la normale N au plan principal du fond 220 de l'empreinte 22 et traversant la cavité 23, des traces inférieure et supérieure W, V respectivement plus proche et plus éloignée du fond 220 de l'empreinte 22, le profil de la cavité 23 dans le plan de coupe Q présente au moins un point localement le plus profond par rapport à la plage exempte de décor dont un point spécifique U définissant avec la trace supérieure V une droite UV sécante à la normale N et formant avec celle-ci un angle Ds-A plus ouvert que tout autre angle formé avec la normale N par une droite passant par la trace supérieure U et par tout autre point localement le plus profond du profil de la cavité 23.

Par ailleurs, il existe au moins un plan de coupe Q dans lequel l'angle Ds-A a une valeur positive au moins égale à 5 degrés diminuée de la valeur de l'angle A.

Ainsi, le contenant constitué d'un seul polymère thermoplastique ou d'un seul mélange de polymères thermoplastiques est avantageusement moulé via une unique opération d'injection dans un moule constitué d'un noyau et d'une empreinte monobloc.

Selon un cas particulier de l'invention, dans chaque plan de coupe Q passant par la normale N et traversant la cavité 23, ledit point spécifique U de la partie 235 du fond 230 se situe à la profondeur maximale PmaxQ de la cavité 23 dans le plan de coupe Q.

Il est à noter ici que la profondeur maximale PmaxQ de la cavité 23 dans le plan de coupe Q est inférieure ou égale à la profondeur maximale Pmax de la cavité 23, tout dépendant du plan de coupe Q considéré.

Plus particulièrement, illustré sur les figures 4 et 5, dans chaque plan de coupe Q passant par la normale N et traversant la cavité 23, la profondeur de la partie 235 du fond 230 croît de façon strictement monotone depuis chacun de ses bords 233, 234 jusqu'à un point spécifique U de la partie 235 du fond 230 qui se situe à la profondeur maximale PmaxQ de la cavité 23 dans le plan de coupe Q.

Comme illustré sur la figure 4 (à gauche), les bords 233, 234 de la partie 235 du fond 230 sont deux à deux confondus avec les bordures 231, 232 de la cavité 23. Ces bordures présentent, dans chaque plan de coupe Q passant par la normale N et traversant la cavité 23, lesdites traces inférieure et supérieure W, V respectivement plus proche et plus éloignée du fond 220 de l'empreinte 22.

L'angle Ds-A que forme, par rapport à la normale N, la droite UV sécante à cette normale N et passant par ledit point spécifique U et par ladite trace supérieure V doit alors avoir une valeur au plus égale à 15 degrés diminuée de la valeur de l'angle A.

Selon une particularité, et comme illustré sur la figure 5 (à gauche), la cavité 23 peut en outre comprendre des surfaces 241, 242 sensiblement planes situées respectivement de part et d'autre de la partie 235 du fond 230 de la cavité 23 et à une profondeur Pmin au moins égale à 0,1 millimètres.

Les bords 233, 234 de la partie 235 du fond 230 sont alors distincts des bordures 231, 232 de la cavité 23 et se situent entre ces dernières au niveau de profondeur des surfaces 241, 242 sensiblement planes.

Dans ce cas, on peut établir que les bords 233, 234 de la partie 235 de fond 230 présentent, dans chaque plan de coupe Q, des traces inférieure et supérieure Y, X respectivement plus proche et plus éloignée du fond 220 de l'empreinte 22.

L'angle Es-A que forme, par rapport à la normale N, la droite UX sécante à cette normale N et passant par le point U et par ladite trace supérieure X doit alors avoir une valeur au plus égale à 15 degrés diminuée de la valeur de l'angle A.

En outre, il existe au moins un plan de coupe Q dans lequel l'angle Es-A a une valeur positive au moins égale à 5 degrés diminuée de la valeur de l'angle A.

Par ailleurs, et comme illustré sur les figures 3 et 6, le grainage du fond 230 à surface granitée de la cavité 23 présente une modulation de profondeur Vp au moins égale à 0,05 millimètres.

Il est à noter que ladite profondeur de la partie 235 du fond 230 au niveau de ses bords 233, 234 est alors plus précisément égale à une valeur T d'enfoncement définie telle qu'illustrée sur la figure 6.

Lorsque l'angle A est de l'ordre de 7 degrés, les surfaces 241, 242 sensiblement planes du fond 230 de la cavité 23 peuvent présenter au moins un point enfoncé à une profondeur au moins égale à 0,30 millimètres.

Corrélativement, le palier 113 du décor 111 peut présenter au moins un point culminant surélevé d'une hauteur au moins égale à 0,30 millimètres.

Le moule 2, ou au moins l'empreinte 22, est de préférence réalisé en acier trempé présentant une dureté d'au moins 34 Rockwell C.

Par ailleurs, bien que la surface granitée du fond 230 de la cavité ou chaque cavité 23 puisse être réalisée par électroérosion, elle est de préférence réalisée par attaque chimique.

Comme le montre encore la figure 6, l'arête qui forme la bordure 232 de la cavité ou de chaque cavité 23 qui est la plus éloignée du fond 220 de l'empreinte 22 est de préférence au moins localement émoussée par polissage.

De même, l'arête qui forme le bord supérieur 234 de la partie 235 du fond 230 de la cavité 23 qui est la plus éloignée du fond 220 de l'empreinte 22 est de préférence au moins localement émoussée par polissage.

Ces caractéristiques permettent notamment l'obtention de décors 111 exempts de défauts, ce résultat étant particulièrement difficile à obtenir dans le cas où le contenant est réalisé dans un polymère à base de polypropylène et comprend un renflement 112.

La présente invention s'applique plus particulièrement aux contenants dont le volume est compris entre 0,5 et 30 litres.

## Revendications

1. Contenant (1) moulé constitué d'un seul polymère thermoplastique ou d'un seul mélange de polymères thermoplastiques, présentant un fond (10) s'étendant: dans un plan principal (P) et une paroi dressée (11) de forme évasée se raccordant au fond (10) et s'étendant sur une hauteur (H) déterminée jusqu'à un bord continu (12) distant du fond (10), cette paroi (11) formant, sur au moins 75% de sa hauteur (H), un angle (A) au moins égal à 5 degrés avec une normale (N) au plan principal (P) du fond (10), la paroi (11) présentant, sur une partie au moins de sa face externe, un décor (111) contigu à une plage exempte de décor, ce décor couvrant au moins une surface au moins égale 100 millimètres carrés et présentant des bordures (114, 115) formées avec la plage contigüe exempte de décor, **caractérisé en ce que** le décor (111) comprend, entre ses bordures (114, 115), un renflement (112) présentant des bords (116, 117) et, entre ses bords (116, 117), une épaisseur variable entre une épaisseur sensiblement nulle au niveau de ses bords (116, 117) et une épaisseur maximale (Emax) entre ses bords (116, 117), les bordures (114, 115) du décor (111) et les bords (116, 117) du renflement (112) étant deux à deux confondus ou distincts, **en ce que** les bordures (114, 115) du décor (111) présentant, dans chaque plan de coupe (Q) passant par la normale (N) et traversant le décor (1111), des traces inférieure et supérieure (K, J) respectivement plus proche et plus éloignée du fond (10) du contenant (1), le profil du renflement (112) dans le plan de coupe (Q) présente au moins un point localement culminant par rapport à la plage exempte de décor dont un point spécifique (I) définissant avec la trace supérieure (J) une droite (IJ) sécante à la normale (N) et formant avec celle-ci un angle (Bs-A) plus ouvert que tout autre angle formé avec la normale (N) par une droite passant par la trace supérieure (J) et par tout autre point localement culminant du profil du renflement (112) et **en ce qu'**il existe au moins un plan de coupe (Q) dans lequel l'angle (Bs-A) que forme, par rapport à la normale (N), la droite (IJ) sécante à cette normale (N) et passant par le point spécifique (I) et par la trace supérieure (J) a une valeur positive au moins égale à 5 degrés diminuée de la valeur de l'angle (A).

2. Contenant (1) suivant la revendication 1, **caractérisé en ce que**, dans chaque plan de coupe (Q) passant par la normale (N) et traversant le décor (111), le point spécifique (I) du profil du renflement (112) se situe au niveau de l'épaisseur maximale (EmaxQ) du renflement (112) dans le plan de coupe (Q).

3. Contenant (1) suivant la revendication 1 ou la revendication 2, **caractérisé en ce que** l'angle (Bs-A) que forme, par rapport à la normale (N), la droite (IJ) sécante à cette normale (N) et passant par le point spécifique (I) et par la trace supérieure (J) a une valeur au plus égale à 15 degrés diminuée de la valeur de l'angle (A).

4. Contenant suivant l'une quelconque des revendications 1 à 3, **caractérisé en ce que** le décor (111) comprend en outre un palier (113) surélevé par rapport à la plage contigüe exempte de décor, le palier (113) présentant des bordures qui sont formées avec la plage contigüe exempte de décor et qui constituent les bordures (114, 115) du décor (111), **en ce que** les bords (116, 117) du renflement (112) sont distincts des bordures (114, 115) du décor (111) et se situent entre ces dernières sur le palier (113), **en ce que** les bords (116, 117) du renflement (112) présentent, dans chaque plan de coupe (Q) passant par la normale (N) et traversant le décor (111), des traces inférieure et supérieure (M, L) respectivement plus proche et plus éloignée du fond (10) du contenant (1), et **en ce que** l'angle (Cs-A) que forme, par rapport à la normale (N), la droite (IL) sécante à cette normale (N) et passant par le point spécifique (I) et par la trace supérieure (L) a une valeur au plus égale à 15 degrés diminuée de la valeur de l'angle (A).

5. Contenant (1) suivant la revendication 4, **caractérisé en ce que** le palier (113) présente une épaisseur (Emin) sensiblement constante au moins égale à 0,1 millimètres.

6. Contenant (1) suivant la revendication 4 ou la revendication 5, **caractérisé en ce qu'il** existe au moins un plan de coupe (Q) dans lequel l'angle (Cs-A) que forme, par rapport à la normale (N), la droite (IL) sécante à cette normale (N) et passant par le point spécifique (I) et par la trace supérieure (L) a une valeur positive au moins égale à 5 degrés diminuée de la valeur de l'angle (A).

7. Contenant suivant l'une quelconque des revendications précédentes, **caractérisé en ce que** le décor (111) présente une surface granitée et **en ce que** le grainage de la surface du décor (111) présente une modulation d'épaisseur au moins égale à 0,05 millimètres.

8. Moule (2) pour la fabrication d'un contenant (1) constitué d'un seul polymère thermoplastique ou d'un seul mélange de polymères thermoplastiques présentant un fond (10) s'étendant dans un plan principal (P) et une paroi dressée (11) de forme évasée se raccordant au fond (10) et s'étendant sur une hauteur déterminée (H) jusqu'à un bord continu (12) distant du fond (10), cette paroi (11) formant, sur au moins 75% de sa hauteur, un angle (A) au moins égal à 5 degrés avec une normale (N) au plan principal (P) du fond (10), ce moule (2) comprenant un noyau (21) définissant la forme de la face interne de la paroi (11) du contenant (1) et une empreinte (22) monobloc comportant une paroi définissant la forme de la face externe de la paroi (11) du contenant (1) et comportant un fond (220) s'étendant dans le plan principal (P) et moulant le fond (10) du contenant (1), l'empreinte (22) présentant au moins localement une cavité (23) en contre-dépouille, la cavité (23) présentant un fond (230), couvrant au moins une surface au moins égale à 100 millimètres carrés et présentant des bordures (231, 232) formées avec la plage de l'empreinte contigüe à la cavité (23), **caractérisé en ce que** le fond (230) comprend au moins une partie (235) présentant des bords (233, 234) et, entre ses bords (233, 234), une profondeur variable entre une profondeur sensiblement nulle au niveau de ses bords (233, 234) et une profondeur maximale (Pmax) entre ses bords (233, 234), les bordures (231, 232) de la cavité (23) et les bords (233, 234) de la partie (235) du fond (230) de la cavité (23) étant deux à deux confondus ou distincts, **en ce que** les bordures (231, 232) de la cavité (23) présentant, dans chaque plan de coupe (Q) passant par la normale (N) et traversant la cavité (23), des traces inférieure et supérieure (W, V) respectivement plus proche et plus éloignée du fond (220) de l'empreinte (22), le profil de la cavité (23) dans le plan de coupe (Q) présente au moins un point localement le plus profond par rapport à la plage exempte de décor dont un point spécifique (U) définissant avec la trace supérieure (V) une droite (UV) sécante à la normale (N) et formant avec celle-ci un angle (Ds-A) plus ouvert que tout autre angle formé avec la normale (N) par une droite passant par la trace supérieure (U) et par tout autre point localement le plus profond du profil de la cavité (23), et **en ce qu'**il existe au moins un plan de coupe (Q) dans lequel l'angle (DS-A) que forme, par rapport à la normale (N), la droite (UV) sécante à cette normale (N) et passant par le point spécifique (U) et par la trace supérieure (V) a une valeur positive au moins égale à 5 degrés diminuée de la valeur de l'angle (A).

9. Moule suivant la revendication 8, **caractérisé en ce que,** dans chaque plan de coupe (Q) passant par la normale (N) et traversant la cavité (23), ledit point spécifique (U) de la partie (235) du fond (230) se situe à la profondeur maximale (PmaxQ) de la cavité (23) dans le plan de coupe (Q).

10. Moule suivant la revendication 8 ou la revendication 9, **caractérisé en ce que** l'angle (Ds-A) que forme, par rapport à la normale (N), la droite (UV) sécante à cette normale (N) et passant par le point spécifique (U) et par la trace supérieure (V) a une valeur au plus égale à 15 degrés diminuée de la valeur de l'angle (A).

11. Moule suivant l'une quelconque des revendications 8 à 10, **caractérisé en ce que** la cavité (23) comprend en outre des surfaces (241, 242) sensiblement planes qui se situent respectivement de part et d'autre de la partie (235) du fond (230) de la cavité (23) et à une profondeur (Pmin) par rapport à la plage de l'empreinte contigüe à la cavité (23), **en ce que** ces surfaces (241, 242) présentent chacune une bordure qui est formée avec la plage de l'empreinte (22) contigüe à la cavité (23) et qui constitue l'une des bordures (231, 232) de la cavité (23), **en ce que** les bords (233, 234) de la partie (235) du fond (230) de la cavité (23) sont distincts des bordures (231, 232) de la cavité (23) et se situent entre ces dernières au niveau des surfaces (241, 242), **en ce que** les bords (233, 234) de la partie (235) de fond (230) présentent, dans chaque plan de coupe (Q), des traces inférieure et supérieure (Y, X) respectivement plus proche et plus éloignée du fond (220) de l'empreinte (22), et **en ce que** l'angle (Es-A) que forme, par rapport à la normale (N), la droite (UX) sécante à cette normale (N) et passant par le point spécifique (U) et par la trace supérieure (X) a une valeur au plus égale à 15 degrés diminuée de la valeur de l'angle (A).

12. Moule suivant la revendication 11, **caractérisé en ce que** la profondeur (Pmin) à laquelle se situent les surfaces (241, 242) par rapport à la plage de l'empreinte contigüe à la cavité (23) est au moins égale à 0,1 millimètres.

13. Moule suivant la revendication 11 ou la revendication 12, **caractérisé en ce qu'il** existe au moins un plan de coupe (Q) dans lequel l'angle (Es-A) que forme, par rapport à la normale (N), la droite (UX) sécante à cette normale (N) et passant par le point spécifique (U) et par la trace supérieure (X) a une valeur positive au moins égale à 5 degrés diminuée de la valeur de l'angle (A).

14. Moule suivant l'une quelconque des revendications 8 à 13, **caractérisé en ce que** le fond (230) de la cavité (23) présente une surface granitée et **en ce que** le grainage du fond (230) de la cavité (23) présente une modulation de profondeur (Vp) au moins égale à 0,05 millimètres.
